# EUROPÄISCHE PATENTSCHRIFT

(11) **EP 3 703 344 B1**
(45) Veröffentlichungstag und Bekanntmachung des Hinweises auf die Patenterteilung: **12.05.2021**
(21) Anmeldenummer: 20155191.8
(22) Anmeldetag: 03.02.2020
(51) Int. Cl.: H04L 29/12, H04L 29/08

(54) **VERFAHREN ZUR SCHAFFUNG DER MÖGLICHKEIT DER ÜBERPRÜFUNG DER KORREKTHEIT VON ZUVOR AN BUSKNOTEN EINES SERIELLEN DATENBUSSYSTEMS VERGEBENEN ADRESSEN**
METHOD FOR PROVIDING THE POSSIBILITY OF CHECKING THE CORRECTNESS OF ADDRESSES PREVIOUSLY ALLOCATED TO BUS NODES OF A SERIAL DATA BUS SYSTEM
PROCÉDÉ DE CRÉATION DE LA POSSIBILITÉ DE VÉRIFICATION DE L'EXACTITUDE D'ADRESSES ATTRIBUÉES PRÉCÉDEMMENT AUX NOEUDS DE BUS D'UN SYSTÈME DE BUS DE DONNÉES SÉRIEL

(30) Priorität: 27.02.2019 DE 102019104918; 29.05.2019 EP 19177391
(43) Veröffentlichungstag der Anmeldung: 02.09.2020
(73) Patentinhaber: Elmos Semiconductor SE, 44227 Dortmund (DE)
(72) Erfinder: Schlautmann, Guido, 48341 Altenberge (DE); Schmidt, André, 51674 Wiehl (DE); Heppekausen, Stefanie, 45239 Essen (DE); Naumann, Jürgen, 44339 Dortmund (DE)
(74) Vertreter: dompatent von Kreisler Selting Werner - Partnerschaft von Patent- und Rechtsanwälten mbB

(56) Entgegenhaltungen:
- WO-A1-2005/050924
- DE-B3-102017 122 365
- XP055530720

## Beschreibung

Die Erfindung betrifft ein Verfahren zur Schaffung der Möglichkeit der Überprüfung der Korrektheit von zuvor an Busknoten eines seriellen Datenbussystems vergebenen Adressen. Ferner betrifft die Erfindung einen Busknoten für ein derartiges Datenbussystem und ein Verfahren zum Betreiben eines solchen Busknotens.

Insbesondere betrifft die Erfindung ein Verfahren zur Erkennung einer fehlerhaften Busknotenadresszuordnung in Datenbussystemen mit Autoadressierung mittels eines Adressierungsstroms.

Autoadressierungsverfahren sind seit Längerem schon bekannt. Für ein besseres Verständnis der Erfindung sei auf die folgenden Schriften verwiesen: EP 1 490 772 B1, EP 1 603 282 B1, DE 10 2017 122 365 B3, DE 10 2010 026 431 B4 und Spezifikation der Elmos Semiconductor AG "RGB LIN Controller with Current Source E521.36" (QM-Nr.: 25DS0160E.02).

Die in diesen Schriften beschriebene Autoadressierungstechnik kommt vor allem in der Automobilindustrie bei der Autoadressierung von Busknoten in einem sequentiellen LIN-Datenbus mit einem Busmaster zur Ansteuerung dieser Busknoten zur Anwendung. Das hier vorgestellte Verfahren setzt voraus, dass die Busknoten in den Datenbus eingefügt sind, so dass sie eine lineare Kette längs des Datenbusses bilden, wobei der Busmaster sich an einem der beiden Enden befindet, das im Folgenden als Busanfang bezeichnet wird.

Die Autoadressierung solcher linearer Ketten von Busknoten längs eines Datenbusses ist unter anderem auch in DE 10 2017 128 489 A1, DE 10 2017 128 923 A1, DE 10 2017 012 179 A1, DE 10 2018 104 488 A1, DE 10 2018 104 489 A1 sowie in den Patentanmeldungen DE 10 2018 124 279.4, DE 10 2018 124 281.6 beschrieben.

Die Kombination der hier vorgestellten Technik mit dem technischen Inhalt aller dieser vorstehend erwähnten Schriften gehört zum Gegenstand der vorliegenden Anmeldung.

Wesentliches Merkmal der in diesen Schriften vorgeschlagenen Autoadressierungsmethodik ist, dass jeder noch nicht adressierte Busknoten in einem durch den Bus-Master initiierten Adressierungszyklus einen Autoadressierungsstrom in Richtung des Busmasters einspeist. Sämtliche Busknoten, die zwischen dem als letzten am Bus angeschlossenen, einen Adressierungsstrom einspeisenden Busknoten und dem Bus-Master liegen, können dann erkennen, dass sie nicht die am weitesten entfernt vom Bus-Master liegenden Busknoten sind. Nur derjenige Busknoten, der noch keine gültige Busknotenadresse besitzt und keinen Adressierungsstrom eines nachfolgenden Busknotens, der weiter weg vom Bus-Master liegt, detektiert, übernimmt auf einen Befehl des Busmasters hin die vom Busmaster angebotene zu vergebende Busknotenadresse. Als gültige Busknotenadresse sei hierbei eine Adresse zu verstehen, die dem Busknoten im Laufe des Adressvergabeverfahrens in korrekter Art und Weise zugewiesen wurde. Es ist denkbar, den Busknoten auf andere Art und Weise vor dem Adressierungsverfahren eine vorläufige Busknotenadresse, beispielsweise mittels einer Zufallszahlmethodik zuzuweisen, die in keinem Zusammenhang mit der physikalischen Position im Datenbus steht. Durch die Übernahme der vom Busmaster angebotenen, zu vergebenden Busknotenadresse besitzt dieser Busknoten dann ab sofort eine gültige Busknotenadresse im Sinne des Autoadressierverfahrens und nimmt dann an nachfolgenden Adressierungszyklen nicht mehr Teil bis die Busknotenadresse beispielsweise auf Befehl des Busmasters ungültig wird. Insbesondere speist er in den nachfolgenden Adressierungszyklen keinen Adressierungsstrom mehr in Richtung Busmaster ein, wodurch sich der ihm zum Busmaster hin nächstgelegene, noch nicht adressierte Busknoten dann im nächsten Adressierungszyklus als letzter Busknoten erkennen kann und die dann angebotene weitere Busknotenadresse vom Busmaster übernehmen kann. Unter einem "noch nicht adressierten Busknoten" wird ein Busknoten verstanden, der noch keine gültige neue Busknotenadresse im Laufe des hier beschriebenen Adressierungsvorgangs erhalten hat. Dieses Verfahren wird dann fortgesetzt, bis alle Busknoten eine Busknotenadresse erhalten haben und der Bus somit vollständig adressiert ist.

Es ist jedoch nicht auszuschließen, dass es bei dieser Adressierung zu Fehlern kommt.

Im Falle einer fehlgeschlagenen Adresszuweisung, sei es durch Doppeltvergabe oder Vertauschen einer Busknotenadresse aus welchen Gründen auch immer, kann nicht entschieden werden, an welcher physikalischen Position ein Busknoten mit einer falschen Busknotenadresse tatsächlich sitzt. Daher wird in einem aufwändigen Produktionsbandendetest beim Autohersteller die Position der Erkennung überprüft. Diese Kosten sollen vermieden werden.

Bisher wird eine erhöhte Sicherheit des Adressierungs-Zyklus durch Durchführung eines redundanten zweiten Adressierungs-Zyklus zu Prüfzwecken (Assign ID und Check ID) erzielt. Bei statischen Fehlern, die sich aus welchen Gründen auch immer reproduzieren, wird eine falsche Position aber immer wieder gleich oder mit hoher Wahrscheinlichkeit gleich falsch vergeben. Der Fehler kann im Stand der Technik also nur für intermittierende Fehler mit hoher Wechselrate sicher erkannt werden.

Ein alternatives Verfahren zur Überprüfung, ob die automatische Busknotenadressierung korrekt erfolgt ist, ist in EP-B-1 676 403 (WO-A-2005/050924) beschrieben.

Eine Aufgabe der Erfindung ist es ein Verfahren anzugeben, das die obigen Nachteile des Stands der Technik nicht aufweist und auch eine Erkennung statischer Fehler zulässt. Darüber hinaus sollten das Verfahren und eine gemäß diesem betriebene Vorrichtung weitere Vorteile aufweisen.

Zur Lösung dieser Aufgabe wird mit der Erfindung vorgeschlagen, ein Verfahren zur Schaffung der Möglichkeit der Überprüfung der Korrektheit von an Busknoten eines seriellen Datenbussystems vergebenen Adressen, das einen Datenbus, einen Busmaster und mehrere jeweils eine Adresse aufweisende Busknoten aufweist, wobei sich der Datenbus von dem Busmaster aus erstreckt und die Busknoten an den Datenbus angeschlossen sind und wobei zumindest einige der Busknoten ein Strommessmittel, das seriell in den Datenbus geschaltet ist, und eine Stromquelle zur Einspeisung von zum Busmaster hinfließendem Strom in den Datenbus aufweisen, mit den folgenden Schritten:
a) Bereitstellen für den und/oder in dem Busmaster von Zuordnungsinformation betreffend die Zuordnung der Adressen der Busknoten zu deren jeweiligen Positionen innerhalb des Datenbus und von Erwartungsinformation betreffend denjenigen oder diejenigen der ein Strommessmittel aufweisenden Busknoten, von dem oder von denen erwartet wird, einen Strom zu detektieren, wenn jeweils einer dieser Busknoten in den Datenbus über seine Stromquelle einen zum Busmaster fließenden Strom einspeist,
b) durch den Busmaster initiiertes Veranlassen des Einspeisens eines Stroms durch einen der ein Strommessmittel und eine Stromquelle aufweisenden Busknoten,
c) durch sämtliche der ein Strommessmittel und eine Stromquelle aufweisenden Busknoten erfolgendes Detektieren, ob diese Busknoten jeweils einen Strom erfassen oder nicht,
d) Übermitteln der Detektionsergebnisse durch die besagten Busknoten an den Busmaster,
e) Durchführen der Schritte b) bis d) für jeden ein Strommessmittel und eine Stromquelle aufweisenden Busknoten und
f) insbesondere im Busmaster erfolgender Vergleich der Detektionsergebnisse mit der jeweiligen Erwartungsinformation zur Bewertung, ob die Busknoten korrekt adressiert sind.

Falls erforderlich können folgende zusätzliche Schritte vorgesehen sein:
- Bestätigung der Korrektheit der Adressvergabe, wenn die Detektionsergebnisse mit der jeweiligen zugehörigen Erwartungsinformation übereinstimmen, und
- Signalisierung eines Fehlers, wenn mindestens eines der Detektionsergebnisse mit der zugehörigen Erwartungsinformation nicht übereinstimmt.

Nach der Erfindung kann es von Vorteil sein, wenn der Schritt des Signalisierens eines Fehlers die Angabe eines konkreten Fehlers anhand der Abweichung des Detektionsergebnisses von der zugehörigen Erwartungsinformation umfasst.

Zweckmäßigerweise umfasst das Bereitstellen der Zuordnungsinformation den folgenden Schritt:
- Durchführen eines vom Busmaster gesteuerten Adressvergabeverfahrens zur automatischen Vergabe von Adressen an mit einem Strommessmittel und einer Stromquelle versehenen Adressier-Busknoten sequentiell in einer definierten Reihenfolge ausgehend von dem am weitesten entfernt vom Busmaster an den Datenbus angeschlossenen Adressier-Busknoten bis zum am nächsten zum Busmaster an den Datenbus angeschlossenen Adressier-Busknoten.

In weiterer vorteilhafter Ausgestaltung ist vorgesehen, dass jeder Adressier-Busknoten mittels seiner Stromquelle in den Datenbus stromauf des betreffenden Busknotens zum Busmaster gelegen oder stromauf seines Strommessmittels zum Busmaster gelegen Strom einspeist oder dass einige der Adressier-Busknoten mittels ihrer jeweiligen Stromquelle in den Datenbus stromauf des betreffenden Busknotens zum Busmaster gelegen oder stromauf des jeweiligen Strommessmittels zum Busmaster gelegen Strom einspeist, während die restlichen Adressier-Busknoten mittels ihrer jeweiligen Stromquellen in den Datenbus stromab des Strommessmittels vom Busmaster gelegen Strom einspeisen. Gemäß dieser Weiterbildung der Erfindung ist also vorgesehen, dass jeder Adressier-Busknoten mittels seiner Stromquelle in den Datenbus Strom einspeist, und zwar an einer Stelle zwischen seinem Strommessmittel und dem zum Busmaster hin nächsten Nachbaren oder, wenn der besagte Busknoten der zum nächsten Busmaster nächste Nachbar ist, zwischen seinem Strommessmittel und dem Busmaster. Alternativ kann vorgesehen sein, dass einige der Adressier-Busknoten mittels ihrer jeweiligen Stromquellen in den Datenbus Strom einspeisen, und zwar an einer Stelle zwischen dem Strommessmittel des betreffenden Busknotens und dem Busmaster hin nächsten Nachbarn oder, wenn der besagte Busknoten der zum Busmaster nächste Nachbar ist, zwischen dem Strommessmittel des besagten Busknotens und dem Busmaster. Die restlichen Adressier-Busknoten speisen mittels ihrer jeweiligen Stromquelle in den Datenbus Strom an einer Stelle zwischen ihrem Strommessmittel und dem in zum Busmaster entgegengesetzter Richtung nächsten Nachbarn oder, wenn ein solcher restlicher Adressier-Busknoten der am weitesten entfernt von dem Busmaster an den Datenbus angeschlossene Busknoten ist, der besagte Busknoten mittels seiner Stromquelle in den Datenbus Strom an einer Stelle einspeist, die vom Busmaster aus betrachtet hinter seinem Strommessmittel liegt.

An dem Datenbus kann auch mindestens ein mit einem Strommessmittel und einer Stromquelle versehener Busknoten angeschlossen sein, dem herstellerseitig eine Adresse zugeordnet ist.

An dem Datenbus kann auch ferner mindestens ein Busknoten ohne Strommessmittel und ohne Stromquelle angeschlossen sein, dem herstellerseitig eine Adresse zugeordnet ist.

Nach der Erfindung weist ein mit einer von dem Busmaster eines seriellen Datenbussystem vergebenen Adresse versehener Busknoten des Datenbussystems auf:
- einer Steuereinheit zur Entgegennahme einer den Busknoten zugeordneten Adresse,
- einem dem Busknoten zugeordneten Strommessmittel zum Messen eines Stroms in dem Datenbus und
- einer Stromquelle,
- wobei die Steuereinheit auf den Empfang eines an den Busknoten gerichteten Befehls des Busmaster hin die Stromquelle zum Einspeisen eines Stroms in den Datenbus ansteuert und an den Busmaster eine Information sendet, ob das dem Busknoten zugeordnete Strommessmittel einen Stromfluss im Datenbus detektiert oder nicht.

Ein Verfahren zum Betreiben eines Busknotens, z.B. eines Busknotens der vorstehend genannten Art, weist die folgenden Schritte auf:
- Vergeben einer Adresse an den Busknoten,
- durch einen Busmaster zwecks Überprüfung der Korrektheit der Adresse des Busknotens erfolgendes Veranlassen der Einspeisung eines Stroms seitens des Busknotens in einen Datenbus,
- durch den Busknoten erfolgendes Überprüfen, ob ein den Busknoten zugeordnetes, in den Datenbus geschaltetes Strommessmittel einen Stromfluss misst oder nicht, und
- durch den Busknoten erfolgendes Mitteilen des Ergebnisses der Überprüfung an den Busmaster.

Auf welche Art und Weise die automatische Vergabe von Adressen an die adressierbaren Busknoten im seriellen Datenbussystem erfolgt, ist für die Erfindung grundsätzlich von untergeordneter Bedeutung. Bereits eingangs wurde auf mehrere Druckschriften bzw. anhängige Patentanmeldungen verwiesen, deren Inhalte in Kombination mit der Erfindung zum Einsatz kommen können. Weitere Autoadressierverfahren, deren ordnungsgemäße Durchführung mit Hilfe der Erfindung zuverlässig überprüft werden kann, sind in WO2019/233776 A1 und in 3 461 068 A1, EP 3 493 479 A1, EP 3 461 069 A1, EP 3 493 481 A1 und EP 3 496 341 A1 sowie in US2019/0095379 B2, US2019/0166089 B2 und US2019/0173838 B2 und in CN109618013 A, CN109862128 A und in CN109871345 A beschrieben, deren Inhalt hiermit durch Bezugnahme zum Gegenstand der vorliegenden Anmeldung gehören.

In einer alternativen Ausgestaltung der Erfindung betrifft diese also ein Verfahren zur Erkennung einer fehlerhaften Busknotenadresszuordnung in beispielsweise linearen Datenbussystemen mit Autoadressierung mittels eines Adressierungsstroms, wie beispielsweise LIN-Datenbus-Systemen mit Autoadressierung. Das Verfahren umfasst die Schritte des Durchführens der Autoadressierung der n Busknoten, des Veranlassens der Einspeisung eines Adressierungsstromes durch einen Busknoten - dem Einspeisebusknoten - , wobei die Veranlassung durch den Busmaster erfolgt oder erfolgen kann, des Erfassens des Datenbusstromes durch die Busknoten und der Ermittlung eines busknotenspezifischen Busstrommesswerts, des Entscheidens, ob ein Adressierungsstrom den jeweiligen Busknoten durchströmt und des Ermittelns eines busknotenspezifischen Adressierungsstromvorhandenseinswerts, wobei die Entscheidung im Busknoten und/oder im Busmaster erfolgen kann, des Übermittelns des busknotenspezifischen Busstrommesswert und /oder des busknotenspezifischen Adressierungsstromvorhandenseinswerts vom Busknoten an den Busmaster, des Bildens eines einspeisebusknotenspezifischen Ergebnisvektors aus den erhaltenen busknotenspezifischen Adressierungsstromvorhandenseinswerten und des Vergleichens des einspeisebusknotenspezifischen Ergebnisvektors mit einem einspeisebusknotenspezifischen Erwartungsvektor.

Bei einem Datenbussystem mit Autoadressierung mittels eines Adressierungsstroms der eingangs beschriebenen Art wird die Aufgabe erfindungsgemäß dadurch gelöst, dass der Busmaster die Einspeisung eines Adressierungsstromes durch einen Busknoten - dem Einspeisebusknoten - veranlasst, die Busknoten dann den jeweiligen Busstrom an ihrer jeweiligen Busknotenposition erfassen und einen busknotenspezifischen Busstrommesswert ermitteln. Es wird dann eine Entscheidung darüber getroffen, ob ein Adressierungsstrom den jeweiligen Busknoten durchströmt und die Existenz eines busknotenspezifischen Adressierungsstroms ermittelt, wobei die Entscheidung im Busknoten und/oder im Busmaster erfolgen kann. Das Verfahren umfasst auch die Übermittlung des busknotenspezifischen Busstrommesswerts und/oder des busknotenspezifischen Adressierungsstromvorhandenseinswerts vom Busknoten an den Busmaster. Der busknotenspezifische Adressierungsstromvorhandenseinswert kann auch erst im Busmaster ermittelt werden. Das Verfahren umfasst ebenfalls die Bildung eines einspeisebusknotenspezifischen Ergebnisvektors aus den erhaltenen busknotenspezifischen Adressierungsstromvorhandenseinswerten und den Vergleich eines einspeisebusknotenspezifischen Ergebnisvektors mit einem einspeisebusknotenspezifischen Erwartungsvektor. Die konkrete weitere Behandlung der Vergleichsergebnisse ist Gegenstand der Weiterbildungen dieses Verfahrens.

Es wird somit ein Verfahren zum Überprüfen der korrekten Position bei autoadressierten Busknoten vorgeschlagen, das dazu vorgesehen und geeignet ist, eine falsche Adressvergabe auch zu erkennen, nachdem die Module eingebaut und adressiert wurden. Eine solche falsche Adressvergabe kann auch durch den Ausfall der Adressierungslogik in einem Busknoten wirkungsgleich entstehen.

Ein weiterer Vorteil des hier vorgestellten Verfahrens ist daher, dass es auch nach Auslieferung des Fahrzeugs im Betrieb oder zu Standzeiten des Fahrzeugs durchgeführt werden kann.

Nach der Durchführung eines Autoadressierungsverfahrens auf Basis eines Adressierungsstromes, insbesondere nach einem oder mehreren der oben angeführten Schritte, folgt vorschlagsgemäß eine unabhängige Prüfsequenz, aus der sich die Position der Busknoten innerhalb des Datenbussystems eindeutig erkennen lässt. Dies ist der Kern der Erfindung.

Der Busmaster fordert der Reihe nach bevorzugt jeden Busknoten auf, seinen Adressierungsstrom in den Datenbus in Richtung Busmaster einzuspeisen. Pro Busknoten führt der Busmaster dabei einen Prüfzyklus durch, bei dem jeweils ein Busknoten seinen Adressierungsstrom zu Prüfzwecken einspeist. Der Busmaster fordert jeden Busknoten auf, den Busstrom an seiner jeweiligen Busknotenposition zu messen und einen Busstrommesswert zu ermitteln. Die Busknoten übertragen ihre jeweiligen Busstrommesswert an den Busmaster, so dass der Busmaster jedem der übermittelten Busstrommesswerte eine Busknotenadresse zuordnen kann.

| | Busknoten ID4 | Busknoten ID3 | Busknoten ID2 | Busknoten ID1 |
|---|---|---|---|---|
| Zyklus 1 | Strom messen, Ergebnis: Strom erkannt | Strom messen, Ergebnis: Strom erkannt | Strom messen, Ergebnis: Strom erkannt | Strom einschalten und messen Ergebnis A: KEIN Strom erkannt Ergebnis B: Strom erkannt |
| Zyklus 2 | Strom messen, Ergebnis: Strom erkannt | Strom messen, Ergebnis: Strom erkannt | Strom einschalten und messen Ergebnis A: KEIN Strom erkannt Ergebnis B: Strom erkannt | Strom messen, Ergebnis: KEIN Strom erkannt |
| Zyklus 3 | Strom messen, Ergebnis: Strom erkannt | Strom einschalten und messen Ergebnis A: KEIN Strom erkannt Ergebnis B: Strom erkannt | Strom messen, Ergebnis: KEIN Strom erkannt | Strom messen, Ergebnis: KEIN Strom erkannt |
| Zyklus 4 | Strom einschalten und messen Ergebnis A: KEIN Strom erkannt Ergebnis B: Strom erkannt | Strom messen, Ergebnis: KEIN Strom erkannt | Strom messen, Ergebnis: KEIN Strom erkannt | Strom messen, Ergebnis: Kein Strom erkannt |

Zum besseren Verständnis der obigen Tabelle hier ein wichtiger Hinweis:
- Ergebnis A: Sofern eine Methodik zur Autoadressierung verwendet wird, bei der der Adressierstrom eines Busknotens nicht durch den ihm zugeordneten Bus-Shunt-Widerstand fließt, muss das Ergebnis sein, dass der Busknoten seinen eigenen Adressierungsstrom nicht misst. [z.B. EP 1 490 772 B1]
- Ergebnis B: Sofern eine Methodik zur Autoadressierung Verwendung findet, bei der der Adressierstrom eines Busknotens jedoch durch den ihm zugeordneten Bus-Shunt-Widerstand fließt, muss das Ergebnis sein, dass der Busknoten seinen eigenen Adressierungsstrom misst. [z.B. DE 10 2017 122 365 B3]

Beispiel für 4 Busknoten am Datenbus bei richtiger Adressierung.

Da die richtige Reihenfolge der Busknoten zumeist konstruktiv bekannt ist, kann diese konstruktiv vorgebbare Information dem Busmaster zu Produktionszeiten zur Verfügung gestellt werden, was typischerweise durch Programmierung erfolgt.

Der Busmaster kann nun folgende vier Prüfungen vornehmen:
Zum Ersten kann der Busmaster feststellen, ob ausschließlich die Busknoten, die zwischen dem einspeisenden Busknoten und ihm selbst angeordnet sind, wie erwartet einen Adressierungsstrom messen.

Zum Zweiten kann der Busmaster feststellen, ob sämtliche adressierten adressierbaren Busknoten, die zwischen dem einspeisenden Busknoten und ihm selbst angeordnet sind, wie erwartet einen Adressierungsstrom messen.

Zum Dritten kann der Busmaster feststellen, ob ausschließlich die Busknoten, die NICHT zwischen dem einspeisenden Busknoten und ihm selbst angeordnet sind, wie erwartet KEINEN Adressierungsstrom messen.

Zum Vierten kann der Busmaster feststellen, ob alle die Busknoten, die NICHT zwischen dem einspeisenden Busknoten und ihm selbst angeordnet sind, wie erwartet KEINEN Adressierungsstrom messen.

Entspricht eine dieser Fragen nicht dem Erwartungswert, so liegt ein Fehler vor. Dieser Fehler kann durch den Busmaster an ein übergeordnetes fahrzeuginternes System oder ein externes System, beispielsweise ein Testsystem oder einen Fahrzeugnutzer, je nach Anwendung und Sicherheitsanforderungen und Nutzungssituation signalisiert werden.

In einer Fertigung und/oder bei Wartungsarbeiten ist es aber sinnvoll, genau feststellen zu können, welcher der Busknoten einen Fehler aufweist. Außerdem ist in der Regel eine vollständige Fehlerabdeckung erforderlich.

Hierfür wiederholt der Busmaster den Prüfzyklus für jeden der Busknoten. Vorteilhafterweise ermittelt der Busmaster hierdurch für jeden der Busknoten einen Antwortvektor. In einem Bussystem mit n Busknoten umfasst der Antwortvektor n Dimensionen. Der Busmaster ermittelt also eine n x n Antwortmatrix, wobei ein Eintrag in einer Antwortmatrix eine 1 oder eine 0 ist. Die Diagonale betrifft die einspeisenden Busknoten selbst und wird je nach Sichtweise des Programmierers mit 1 oder 0 besetzt. Eine 1 kann dabei beispielsweise bedeuten, dass bei der Prüfung ein Adressierungsstrom gemessen wurde. Eine 0 muss dann bedeuten, dass kein Adressierungsstrom gemessen wurde. Eine beispielhafte Matrix für ein System mit vier Busknoten bei richtiger Zuordnung sieht dabei wie folgt aus:

| | a | b | c | d |
|---|---|---|---|---|
| A | 0 | 1 | 1 | 1 |
| B | 0 | 0 | 1 | 1 |
| C | 0 | 0 | 0 | 1 |
| D | 0 | 0 | 0 | 0 |

Die Busknoten sind dabei mit den Buchstaben a, b, c, d beispielhaft durchnummeriert, und zwar beginnend mit dem am weitesten vom Busmaster entfernt an dem Datenbus angeschlossenen Busknoten, während A, B, C, D die einzelnen Mess- bzw. Überprüfungszyklen bezeichnet.

Im Messzyklus A speiste der Busknoten a einen Adressierstrom ein. Da der Busknoten a am weitesten vom Busmaster entfernt lokalisiert ist, stellen die Busknoten b,c,d einen Adressierungsstrom fest. Daher sind die entsprechenden Werte der Matrix auf 1 gesetzt.

Im Messzyklus B speiste der Busknoten b einen Adressierstrom ein. Da der Busknoten a dem Busknoten b vom Busmaster aus gesehen nachfolgt, stellte er keinen Adressierungsstrom im Datenbus fest. Daher ist sein Wert auf 0 gesetzt. Da die Busknoten c und d dem Busknoten b vom Busmaster aus gesehen vorausgehen, stellten sie jeweils einen Adressierungsstrom im Datenbus fest. Daher sind ihre Werte auf 1 gesetzt.

Im Messzyklus C speiste der Busknoten c einen Adressierstrom ein. Da die Busknoten a und b dem Busknoten c vom Busmaster aus gesehen nachfolgen, stellten sie keinen Adressierungsstrom im Datenbus fest. Daher sind ihre Werte auf 0 gesetzt. Da der Busknoten d dem Busknoten c vom Busmaster aus gesehen vorausgeht, stellte er einen Adressierungsstrom im Datenbus fest. Daher ist sein Wert auf 1 gesetzt.

Im Messzyklus D speiste der Busknoten d einen Adressierstrom ein. Da die Busknoten a, b und c dem Busknoten d vom Busmaster aus gesehen nachfolgen, stellten sie keinen Adressierungsstrom im Datenbus fest. Daher sind ihre Werte auf 0 gesetzt.

Die Matrix wird in charakteristischer Weise deformiert, wenn bestimmte Fehler vorliegen.

Im Folgenden werden beispielhaft einige Fälle aufgeführt:
Ausfall der Adressierungsstromquelle des Busknotens b zum Testzeitpunkt (Adressierung möglicherweise korrekt.):

| | a | b | c | d |
|---|---|---|---|---|
| A | 0 | 1 | 1 | 1 |
| B | 0 | 0 | 0 | 0 |
| C | 0 | 0 | 0 | 1 |
| D | 0 | 0 | 0 | 0 |

Ausfall der Adressierungsstromquelle des Busknotens b zum Testzeitpunkt und zum Adressierungszeitpunkt:

| | a | b | c | d |
|---|---|---|---|---|
| A | 0 | 1 | 1 | 0 |
| B | 0 | 0 | 0 | 0 |
| C | 0 | 0 | 0 | 0 |
| D | 0 | 0 | 0 | 0 |

Da der Busknoten c in Folge des fehlenden Adressierungsstroms des Busknotens b der Auffassung war, der letzte Knoten zu sein, haben sowohl der Busknoten c als auch der Busknoten b die gleiche Busknotenadresse übernommen, da sie während des Adressierungsvorgangs zum gleichen Zeitpunkt sich als letzte Busknoten wähnten. Die Busknotenadresse für den Busknoten d wurde daher von keinem Busknoten übernommen.

Nachdem der Master die Ergebnisse aus allen Zyklen vorliegen hat (Strom erkannt/kein Strom erkannt), kann somit eindeutig ausgewertet werden, ob die Busknoten der Reihe nach am Datenbus richtig adressiert wurden.

Es wird somit ein Verfahren zur Erkennung einer fehlerhaften Busknotenadresszuordnung in Datenbussystemen mit Autoadressierung mittels eines Adressierungsstroms vorgeschlagen. Das Datenbussystem weist dabei einen Datenbus, einen Busmaster und n Busknoten auf. Jeder Busknoten ist in den Datenbus eingefügt und wird daher von einem elektrischen Strom in Richtung Busmaster, den ein nachfolgender Busknoten einspeist, durchströmt. Das Verfahren ist in einer Stern-Konfiguration daher nicht anwendbar. Der Busmaster befindet sich daher an einem Ende des Datenbusses. Der Busknoten, der sich vom Busmaster aus gesehen in der Reihenfolge der Busknoten längs des Datenbusses näher am Busmaster befindet als ein anderer Busknoten wird im Folgenden als vorausgehender Busknoten und der andere Busknoten als nachfolgender Busknoten bezeichnet. Jeder Busknoten kann einen Adressierungsstrom in Richtung auf den Busmaster in den Datenbus einspeisen. Jeder Busknoten wird somit von dem Adressierungsstrom nachfolgender Busknoten im Falle einer solchen Einspeisung durch nachfolgende Busknoten durchströmt. Bevorzugt jeder der Busknoten weist eine Messvorrichtung auf, die dazu vorgesehen ist, den Adressierungsstrom nachfolgender Busknoten erfassen zu können. Das vorgeschlagene Verfahren weist folgende Schritte auf:
- Durchführen der Autoadressierung der n Busknoten;
- Veranlassung der Einspeisung eines Adressierungsstromes durch einen Busknoten - dem Einspeisebusknoten -, wobei die Veranlassung durch den Busmaster erfolgt;
- Erfassen des Datenbusstromes durch die Busknoten und Ermittlung eines busknotenspezifischen Busstrommesswerts;
- Entscheidung, ob ein Adressierungsstrom den jeweiligen Busknoten durchströmt und Ermittlung eines busknotenspezifischen Adressierungsstromvorhandenseinswerts, wobei die Entscheidung im Busknoten und/oder im Busmaster erfolgen kann;
- Übermittlung des busknotenspezifischen Busstrommesswerts und /oder des busknotenspezifischen Adressierungsstromvorhandenseinswerts vom Busknoten an den Busmaster;
- Bildung eines einspeisebusknotenspezifischen Ergebnisvektors aus den erhaltenen busknotenspezifischen Adressierungsstromvorhandenseinswerten;
- Vergleich eines einspeisebusknotenspezifischen Ergebnisvektors mit einem einspeisebusknotenspezifischen Erwartungsvektor.

Bevorzugt werden die zuvor beschriebenen Verfahrensschritte für alle Busknoten als Einspeisebusknoten durchgeführt. Dabei erfolgt natürlich der Schritt des Durchführens der Autoadressierung der n Busknoten für alle anderen Busknoten als Einspeisebusknoten nicht noch einmal.

Bevorzugt erfolgt dann ein Vergleich der ermittelten einspeisebusknotenspezifischen Ergebnisvektoren mit einspeisebusknotenspezifischen Erwartungsvektoren für eine ordnungsgemäße Zuordnung und das Schließen auf eine ordnungsgemäße Zuordnung, wenn die ermittelten einspeisebusknotenspezifischen Ergebnisvektoren mit den einspeisebusknotenspezifischen Erwartungsvektoren für eine ordnungsgemäße Zuordnung übereinstimmen.

Ebenso bevorzugt erfolgt dann der Vergleich der ermittelten einspeisebusknotenspezifischen Ergebnisvektoren mit einspeisebusknotenspezifischen Erwartungsvektoren für eine ordnungsgemäße Zuordnung und das Schließen auf eine NICHT ordnungsgemäße Zuordnung, wenn die ermittelten einspeisebusknotenspezifischen Ergebnisvektoren mit den einspeisebusknotenspezifischen Erwartungsvektoren für eine ordnungsgemäße Zuordnung NICHT übereinstimmen.

Darüber hinaus können spezifische Fehler mit den sich ergebenden Mustern vorausberechnet werden. Dies kann genutzt werden, um die Art des Fehlers zu erkennen.

Bevorzugt erfolgt daher außerdem ein Vergleich der ermittelten einspeisebusknotenspezifischen Ergebnisvektoren mit einspeisebusknotenspezifischen Erwartungsvektoren für eine NICHT ordnungsgemäße Zuordnung und das Schließen auf einen vorbestimmten konkreten Fehler, wenn die ermittelten einspeisebusknotenspezifischen Ergebnisvektoren mit den einspeisebusknotenspezifischen Erwartungsvektoren für eine NICHT ordnungsgemäße Zuordnung übereinstimmen.

Je nach erkanntem Fehler kann dann eine fehlerspezifische Signalisierung an einen Nutzer, an eine Testvorrichtung und/oder ein übergeordnetes System erfolgen.

### Vorteil der Erfindung

Ein solches Verfahren zur Erkennung einer fehlerhaften Busknotenadresszuordnung in Datenbussystemen mit Autoadressierung mittels eines Adressierungsstroms ermöglicht zumindest in einigen Realisierungen:
- Eine erhöhte Sicherheit bei der Auto-Adressierung durch die Trennung in zwei verschiedene Mechanismen zur Adressierung und Prüfung ob die Adressierung korrekt war.
- Eine Erkennung fehlerhafter Adresszuweisungen.
- Eine Erhöhung der Testabdeckung und Vereinfachung des Produktionsendtests beim Autohersteller.
- Die Ermöglichung von Mechanismen der funktionalen Sicherheit. Insbesondere wird hierdurch ein sogenanntes "Safety Measure" also ein Sicherheitsmesswert für eine erfolgreiche Auto-Adressierung durch das vorgeschlagene Verfahren möglich.
- Der Test kann im Ruhezustand und Betrieb eines Fahrzeugs durchgeführt werden.

Die Vorteile sind hierauf aber nicht beschränkt.

### Liste der zitierten Schriften

EP 1 490 772 B1
EP 1 603 282 B1
EP 1 676 403 B1
DE 10 2017 122 365 B3
DE 10 2010 026 431 B4
DE 10 2017 128 489 A1
DE 10 2017 128 923 A1
DE 10 2017 012 179 A1
DE 10 2018 104 488 A1
DE 10 2018 104 489 A1
EP 3 461 068 A1
EP 3 493 479 A1
EP 3 461 069 A1
EP 3 493 481 A1
EP 3 496 341 A1
US 2019/0095379 B2
US 2019/0166089 B2
US 2019/0173838 B2
CN 109 618 013 A
CN 109 862 128 A
CN 109 871 345 A
WO 2019/233776 A1
Spezifikation der Elmos Semiconductor AG "RGB LIN Controller with Current Source E521.36" (QM-Nr.: 25DS0160E.02)

### Liste der zitierten noch nicht veröffentlichten Anmeldungen

DE 10 2018 124 279.4
DE 10 2018 124 281.6

## Patentansprüche

1. Verfahren zur Schaffung der Möglichkeit der Überprüfung der Korrektheit von zuvor an Busknoten eines seriellen Datenbussystems vergebenen Adressen, das einen Datenbus, einen Busmaster und mehrere Adressen aufweisende Busknoten aufweist, wobei sich der Datenbus von dem Busmaster aus erstreckt und die Busknoten an den Datenbus angeschlossen sind und wobei zumindest einige der Busknoten ein Strommessmittel, das seriell in den Datenbus geschaltet ist, und eine Stromquelle zur Einspeisung von zum Busmaster hinfließendem Strom in den Datenbus aufweisen, mit den folgenden Schritten:
a) Bereitstellen für den und/oder in dem Busmaster von Zuordnungsinformation betreffend die Zuordnung der Adressen der Busknoten zu deren jeweiligen Positionen innerhalb des Datenbus und von Erwartungsinformation betreffend denjenigen oder diejenigen der ein Strommessmittel aufweisenden Busknoten, von dem oder von denen erwartet wird, einen Strom zu detektieren, wenn jeweils einer dieser Busknoten in den Datenbus über seine Stromquelle einen zum Busmaster fließenden Strom einspeist,
b) durch den Busmaster initiiertes Veranlassen des Einspeisens eines Stroms durch einen der ein Strommessmittel und eine Stromquelle aufweisenden Busknoten,
c) durch sämtliche der ein Strommessmittel und eine Stromquelle aufweisenden Busknoten erfolgendes Detektieren, ob diese Busknoten jeweils einen Strom erfassen oder nicht,
d) Übermitteln der Detektionsergebnisse durch die besagten Busknoten an den Busmaster,
e) Durchführen der Schritte b) bis d) für jeden ein Strommessmittel und eine Stromquelle aufweisenden Busknoten und
f) Vergleich der Detektionsergebnisse mit der jeweiligen Erwartungsinformation zur Bewertung, ob die Busknoten korrekt adressiert sind.

2. Verfahren nach Anspruch 1, mit dem folgenden zusätzlichen Schritten:
- Bestätigung der Korrektheit der Adressvergabe, wenn die Detektionsergebnisse mit der jeweiligen zugehörigen Erwartungsinformation übereinstimmen, und
- Signalisierung eines Fehlers, wenn mindestens eines der Detektionsergebnisse mit der zugehörigen Erwartungsinformation nicht übereinstimmt.

3. Verfahren nach Anspruch 2, **dadurch gekennzeichnet, dass** der Schritt des Signalisierens eines Fehlers die Angabe eines konkreten Fehlers anhand der Abweichung des Detektionsergebnisses von der zugehörigen Erwartungsinformation umfasst.

4. Verfahren nach einem der Ansprüche 1 bis 3, **dadurch gekennzeichnet, dass** das Bereitstellen der Zuordnungsinformation den folgenden Schritt umfasst:
- Durchführen eines vom Busmaster gesteuerten Adressvergabeverfahrens zur automatischen Vergabe von Adressen an mit einem Strommessmittel und einer Stromquelle versehenen Adressier-Busknoten sequentiell in einer definierten Reihenfolge ausgehend von dem am weitesten entfernt vom Busmaster an den Datenbus angeschlossenen Adressier-Busknoten bis zum am nächsten zum Busmaster an den Datenbus angeschlossenen Adressier-Busknoten.

5. Verfahren nach Anspruch 4, **dadurch gekennzeichnet, dass** jeder Adressier-Busknoten mittels seiner Stromquelle in den Datenbus stromauf des betreffenden Busknotens zum Busmaster gelegen oder stromauf seines Strommessmittels zum Busmaster gelegen Strom einspeist oder dass einige der Adressier-Busknoten mittels ihrer jeweiligen Stromquelle in den Datenbus stromauf des betreffenden Busknotens zum Busmaster gelegen oder stromauf des jeweiligen Strommessmittels zum Busmaster gelegen Strom einspeist, während die restlichen Adressier-Busknoten mittels ihrer jeweiligen Stromquellen in den Datenbus stromab des Strommessmittels vom Busmaster gelegen Strom einspeisen.

6. Verfahren nach einem der Ansprüche 1 bis 5, **dadurch gekennzeichnet, dass** an dem Datenbus auch mindestens ein mit einem Strommessmittel und einer Stromquelle versehener Busknoten angeschlossen ist, dem herstellerseitig eine Adresse zugeordnet ist.

7. Verfahren nach einem der Ansprüche 1 bis 6, **dadurch gekennzeichnet, dass** an den Datenbus auch mindestens ein Busknoten ohne Strommessmittel und ohne Stromquelle angeschlossen ist, dem herstellerseitig eine Adresse zugeordnet ist.

8. Mit einer von dem Busmaster eines seriellen Datenbussystem vergebenen Adresse versehener Busknoten des Datenbussystems zur Verwendung in dem Verfahren nach einem der vorherigen Ansprüche, mit
- einer Steuereinheit zur Entgegennahme einer den Busknoten zugeordneten Adresse,
- einem dem Busknoten zugeordneten Strommessmittel zum Messen eines Stroms in dem Datenbus und
- einer Stromquelle,
- wobei die Steuereinheit auf den Empfang eines an den Busknoten gerichteten Befehls des Busmaster hin die Stromquelle zum Einspeisen eines Stroms in den Datenbus ansteuert und an den Busmaster eine Information sendet, ob das dem Busknoten zugeordnete Strommessmittel einen Stromfluss im Datenbus detektiert oder nicht.

9. Verfahren zum Betreiben eines Busknotens nach Anspruch 8, mit den folgenden Schritten:
- Vergeben einer Adresse an den Busknoten,
- durch einen Busmaster zwecks Überprüfung der Korrektheit der Adresse des Busknotens erfolgendes Veranlassen der Einspeisung eines Stroms seitens des Busknotens in einen Datenbus,
- durch den Busknoten erfolgendes Überprüfen, ob ein den Busknoten zugeordnetes, in den Datenbus geschaltetes Strommessmittel einen Stromfluss misst oder nicht, und
- durch den Busknoten erfolgendes Mitteilen des Ergebnisses der Überprüfung an den Busmaster.

## Claims

1. Method for providing the possibility of verifying the correctness of addresses previously allocated to bus nodes of a serial data bus system comprising a data bus, a bus master and a plurality of bus nodes each having an address, wherein the data bus extends from the bus master and the bus nodes are connected to the data bus, and wherein at least some of the bus nodes comprise a current measuring means serially connected to the data bus and a current source for supplying current into the data bus which current flows to the bus master, the method comprising the following steps:
a) providing, for and/or in the bus master, allocation information regarding the allocation of the addresses of the bus nodes to their respective positions in the data bus and expectation information regarding that bus node or those bus nodes comprising a current measuring means, which is or are expected to detect a current if a respective one of these bus nodes supplies a current into the data bus via its current source, which current flows towards the bus master,
b) initiated by the bus master, causing a current to be supplied by one of the bus nodes comprising a current measuring means and a current source,
c) detecting by all bus nodes comprising a current measuring means and a current source, whether these bus nodes each sense a current or not,
d) transmitting the detection results to the bus master by said bus nodes,
e) performing steps b) to d) for each bus node nodes comprising a current measuring means and a current source, and
f) comparing the detection results and the respective expectations information to assess, whether the bus nodes are addressed correctly.

2. Method of claim 1, comprising the following additional steps:
- acknowledging the correctness of the address allocation, if the detection results correspond to the respective associated expectation information, and
- signaling an error, if at least one of the detection results does not correspond to the associated expectation information.

3. Method of claim 2, **characterized in that** the step of signaling an error comprises the indication of a concrete error based on the deviation of the detection result from the associated expectation information.

4. Method of one of claims 1 to 3, **characterized in that** providing the allocation information comprises the following step:
- performing an address allocation process, under control by the bus master, for an automatic allocation of addresses to bus nodes to be addressed provided with a current measuring means and a current source, which allocation is performed sequentially in a defined order starting from the bus node to be addressed connected to the data bus at the position farthest from the bus master to the bus node to be addressed connected to the data bus at the position closest to the bus master.

5. Method of claim 4, **characterized in that**, via its current source, each bus node to be addressed supplies current into the data bus upstream of the respective bus node with respect to the bus master via its current source or upstream of its current measuring means with respect to the bus master or **in that**, via their respective current sources, some of the bus nodes to be addressed supply current into the data bus upstream of the respective bus node with respect to the bus master or upstream of the respective current measuring means with respect to the bus master, whereas, via their respective current sources, the rest of the bus nodes to be addressed supply current into the data bus downstream of the current measuring means with respect to the bus master.

6. Method of one of claims 1 to 5, **characterized in that** at least one bus node provided with a current measuring means and a current source is also connected to the data bus, to which bus node an address has been allocated by the manufacturer.

7. Method of one of claims 1 to 6, **characterized in that** at least one bus node without a current measuring means and without a current source is also connected to the data bus, to which bus node an address has been allocated by the manufacturer.

8. Bus node of a data bus system provided with an address allocated by the bus master of the serial data bus system, in particular for implementation in the method of one of the preceding claims, comprising
- a control unit for accepting an address allocated to the bus node,
- a current measuring means allocated to the bus node, for measuring a current in the data bus, and
- a current source,
- wherein, upon reception of an instruction from the bus master directed to the bus node, the control unit controls the current source to supply a current into the data bus and transmits information to the bus master as to whether the current measuring means allocated to the bus node detects a current flow in the data bus or not.

9. Method for operating a bus node of claim 8, comprising the following steps:
- allocating an address to the bus node,
- causing, by a bus master for the verification of the correctness of the bus node address, the bus node to supply a current into a data bus,
- verifying, by the bus node, whether a current measuring means allocated to the bus node and connected to the data bus measures a current flow or not, and
- reporting the result of the verification to the bus master by the bus node.

## Revendications

1. Procédé de création de la possibilité de vérification de l'exactitude d'adresses attribuées précédemment aux nœuds de bus d'un système de bus de données série, lequel comporte un bus de données, un maître bus et plusieurs nœuds de bus comportant des adresses, dans lequel le bus de données s'
étend à partir du maître bus et les nœuds de bus sont raccordés au bus de données et dans lequel au moins certains des nœuds de bus comportent un moyen de mesure de courant, lequel est branché en série dans le bus de données, et une source de courant destinée à injecter dans le bus de données du courant dirigé vers le maître bus, avec les étapes suivantes :
a) préparation pour et/ou dans le maître bus d'informations d'association concernant l'association des adresses des nœuds de bus à leur position respective au sein du bus de données et d'informations d'attente concernant le ou les nœuds de bus comportant un moyen de mesure de courant, duquel ou desquels il est attendu qu'un courant soit détecté lorsque respectivement un de ces nœuds de bus injecte par le biais de sa source de courant dans le bus de données un courant dirigé vers le maître bus,
b) demande initiée par le maître bus de l'injection d'un courant par un des nœuds de bus comportant un moyen de mesure de courant et une source de courant,
c) détection, s'effectuant par tous les nœuds de bus comportant un moyen de mesure de courant et une source de courant, de la saisie ou de l'absence de saisie d'un courant par ces nœuds de bus respectifs,
d) transmission des résultats de détection par lesdits nœuds de bus au maître bus,
e) mise en œuvre des étapes b) à d) pour chaque nœud de bus comportant un moyen de mesure de courant et une source de courant,
f) comparaison des résultats de détection avec les informations d'attente respectives afin d'évaluer si les nœuds de bus sont adressés correctement.

2. Procédé selon la revendication 1, avec les étapes supplémentaires suivantes :
- confirmation de l'exactitude de l'attribution d'adresse lorsque les résultats de détection coïncident avec les informations d'attente associées respectives, et
- signalement d'une erreur lorsqu'au moins un des résultats de détection ne coïncide pas avec l'information d'attente associée.

3. Procédé selon la revendication 2, **caractérisé en ce que** l'étape de signalement d'une erreur comprend les données d'une erreur concrète à l'aide de la déviation du résultat de détection par rapport à l'information d'attente associée.

4. Procédé selon l'une des revendications 1 à 3, **caractérisé en ce que** la préparation des informations d'association comprend l'étape suivante :
- mise en œuvre d'un procédé d'attribution d'adresse commandé par le maître bus pour l'attribution automatique d'adresses aux nœuds de bus d'adressage prévus dotés d'un moyen de mesure de courant et d'une source de courant de manière séquentielle dans un ordre défini en partant du nœud de bus d'adressage raccordé au bus de données le plus loin du maître bus jusqu'au nœud de bus d'adressage raccordé au bus de données le plus près du maître bus.

5. Procédé selon la revendication 4, **caractérisé en ce qu'**au moyen de sa source de courant chaque nœud de bus d'adressage injecte du courant dans le bus de données en amont du nœud de bus concerné par rapport au maître bus ou en amont de son moyen de mesure de courant par rapport au maître bus ou **en ce qu'**au moyen de leur source de courant respective, certains des nœuds de bus d'adressage injectent du courant dans le bus de données en amont du nœud de bus concerné par rapport au maître bus ou en amont de leur moyen de mesure de courant par rapport au maître bus pendant que les nœuds de bus d'adressage restants injectent du courant au moyen de leur source de courant respective dans le bus de données en aval du moyen de mesure de courant par rapport au maître bus.

6. Procédé selon l'une des revendications 1 à 5, **caractérisé en ce qu'**est également raccordé au bus de données au moins un nœud de bus prévu doté d'un moyen de mesure de courant et d'une source de courant, auquel une adresse est associée par le fabricant.

7. Procédé selon l'une des revendications 1 à 6, **caractérisé en ce qu'**est également raccordé au bus de données au moins un nœud de bus sans moyen de mesure de courant et sans source de courant, auquel une adresse est associée par le fabricant.

8. Nœud de bus du système de bus de données, prévu doté d'une adresse attribuée par le maître bus d'un système de bus de données série, destiné à être utilisé dans le procédé selon l'une des revendications précédentes, doté
- d'une unité de commande pour acceptation d'une adresse associée au nœud de bus,
- d'un moyen de mesure de courant associé au nœud de bus destiné à mesurer un courant dans le bus de données et
- d'une source de courant,
- dans lequel l'unité de commande, à réception d'un ordre du maître bus au nœud de bus, commande à la source de courant l'injection d'un courant dans le bus de données et envoie une information au maître bus sur la détection ou l'absence de détection d'un passage de courant dans le bus de données par le moyen de mesure de courant associé au nœud de bus.

9. Procédé de fonctionnement d'un nœud de bus selon la revendication 8, avec les étapes suivantes :
- attribution d'une adresse au nœud de bus,
- demande, effectuée par un maître bus à des fins de vérification de l'exactitude de l'adresse du nœud de bus, de l'injection d'un courant par le nœud de bus dans un bus de données,
- vérification effectuée par le nœud de bus de la mesure ou de l'absence de mesure d'un passage de courant par un moyen de mesure de courant associé au nœud de bus et branché dans le bus de données, et
- communication, effectuée par le nœud de bus, du résultat de la vérification au maître bus.
